# EUROPEAN PATENT APPLICATION

(11) **EP 1 467 116 A2**
(43) Date of publication of application: **13.10.2004**
(21) Application number: 04008452.7
(22) Date of filing: 07.04.2004
(51) Int. Cl.: F16F 7/12

(54) **Shock absorbing structure for vehicle**

(30) Priority: 09.04.2003 JP 2003105628
(71) Applicant: Kojima Press Industry Co., Ltd., Toyota-shi, Aichi-ken (JP)
(72) Inventor: Kawamoto, Kazuhiro Kojima Press Ind. Co., Ltd., Toyota-shi Aichi-ken (JP); Fukuda, Takayuki, Toyota-shi Aichi-ken (JP); Nakanou, Hideya, Kariya-shi Aichi-ken (JP)
(74) Representative: Leson, Thomas Johannes Alois, Dipl.-Ing.

(57) **Abstract**

A shock absorbing structure (10) for a vehicle disposed in a space (40) which is defined by and between an interior component (36) of the vehicle and a body component (38) of the vehicle, characterized by including: a shock absorbing member (12) disposed in the space which has a size that is determined by a combination of kinds of the interior component and the body component, the shock absorbing member being disposed in the space such that a clearance (42) is formed between the shock absorbing member and the interior component and/or between the shock absorbing member and the body component, the shock-absorbing member being deformed upon application of a shock thereto so as to absorb the shock by an amount not smaller than a prescribed lower limit; and at least one spacer rib (14) each consisting of a thin-walled rib provided integrally on the shock absorbing member, the at least one spacer rib being disposed in the clearance such that the spacer rib is interposed at least one of (a) between a portion of the interior component and a portion of the body component, which portions are opposed to each other, (b) between a portion of the shock absorbing member at which the thin-walled rib is provided and a portion of the interior component, which portions are opposed to each other, and (c) between the portion of the shock absorbing member at which the thin-walled rib is provided and a portion of the body component, which portions are opposed to each other, the thin-walled rib being opposed to or held in contact with, at an end face of an outer peripheral portion thereof, at least one of the interior component and the body component.

## Description

### BACKGROUND OF THE INVENTION

### Field of the Invention

The present invention relates in general to a shock absorbing structure for a vehicle. More particularly, the invention is concerned with such a shock absorbing structure which can be advantageously disposed in an installation space defined by and between an interior component and a body component of the vehicle.

### Discussion of Related Art

In a motor vehicle or other vehicle, in general, a shock absorbing structure is provided in an installation space defined by and between an interior component such as a headlining, a pillar garnish, a roof side rail, an instrument panel or a console box, which would be possibly brought into contact with an occupant's body in the event of a collision of the vehicle with a certain object, and a body component such as a panel which constitutes a portion of the body of the vehicle and which is disposed on one of opposite sides of the interior component that is remote from an occupants' compartment of the vehicle. The shock absorbing structure described above is effective to alleviating an impact or shock to be applied to the occupant's body upon contact of the interior component with the occupant's body, so as to protect the occupant's body in the event of the collision.

The shock absorbing structure is generally designed to have a configuration which corresponds to that of an installation space defined by and between the interior component and the body component in which the shock absorbing structure is to be disposed. The thus designed shock absorbing structure is disposed in the space to fill or occupy the space, with no clearance being present between the shock absorbing structure and the interior component and/or between the shock absorbing structure and the body component. This arrangement is effective to prevent an abnormal noise from being generated due to contact of the shock absorbing structure with the interior component or the body component by displacement of the shock absorbing structure which arises from vibration caused during running of the vehicle. Further, in this arrangement, the interior component is protected from being easily concaved or dented when it is pressed, so that the interior component is prevented from having a poor or low-grade image contrary to a desirable luxurious or high-grade image.

The installation space defined by and between the interior component and the body component in which the shock absorbing structure is disposed, however, varies in shape or configuration depending upon the type of vehicle. Accordingly, it has been a common practice to prepare various shock absorbing structures having respective different shapes which are designed so as to correspond to the respective different shapes of the installation spaces of the various types of vehicles.

In the conventional process of designing the shock absorbing structure, therefore, it is required to confirm whether each of the shock absorbing structures having the respective different shapes corresponding to the respective different shapes of installation spaces of the various types of the vehicles is capable of exhibiting a sufficiently high shock absorbing capability when each shock absorbing structure is disposed in the corresponding installation space. This additional step undesirably makes the designing of the shock absorbing structure cumbersome or complicated and considerably deteriorates the production efficiency.

The Applicant of the present invention cooperated with the other to propose, in JP-A-2002-166804, a shock absorbing structure for a vehicle which is made compact in size, so that the disclosed shock absorbing structure can be disposed in installation spaces of different sizes while assuring a sufficiently high shock absorbing capability. The shock absorbing structure disclosed in the Publication is, however, silent about the above-described problems of generation of the abnormal noise and deterioration of the high-grade or luxurious image of the interior component, which problems arise from the clearance formed between the shock absorbing structure and at least one of the interior component and the body component when the compact-sized shock absorbing structure is disposed in the installation spaces.

### SUMMARY OF THE INVENTION

The present invention was developed in the light of the situations described above. It is therefore an object of the invention to provide a shock absorbing structure capable of exhibiting a sufficiently high degree of shock absorbing capacity or capability irrespective of a shape of an installation space in which the shock absorbing structure is disposed, while assuring advantages obtained where the shock absorbing structure is designed so as to have a shape corresponding to that of the space, the shock absorbing structure being easily and suitably designed and assuring improved production efficiency.

The above-indicated object may be achieved according to a principle of the invention, which provides a shock absorbing structure for a vehicle disposed in an installation space which is defined by and between an interior component of the vehicle and a body component of the vehicle, characterized by including: a shock absorbing member disposed in the installation space which has a size that is determined by a combination of kinds of the interior component and the body component, the shock absorbing member being disposed in the installation space such that a clearance is formed between the shock absorbing member and the interior component and/or between the shock absorbing member and the body component, the shock absorbing member being deformed upon application of a shock thereto so as to absorb the shock by an amount not smaller than a prescribed lower limit; and at least one spacer rib each consisting of a thin-walled rib provided integrally on the shock absorbing member, the at least one spacer rib being disposed in the clearance such that the spacer rib is interposed at least one of (a) between a portion of the interior component and a portion of the body component, which portions are opposed to each other, (b) between a portion of the shock absorbing member at which the thin-walled rib is provided and a portion of the interior component, which portions are opposed to each other, and (c) between the portion of the shock absorbing member at which the thin-walled rib is provided and a portion of the body component, which portions are opposed to each other, the thin-walled rib being opposed to or held in contact with, at an end face of an outer peripheral portion thereof, at least one of the interior component and the body component.

The shock absorbing structure constructed according to the present invention includes the shock absorbing member which is disposed in the installation space having a size that is determined by a combination of kinds of the interior component and the body component of the vehicle and which absorbs the shock applied thereto by an amount not smaller than a prescribed lower limit. Accordingly, the present shock absorbing structure assures a stable shock absorbing capability irrespective of the size of the installation space in which the shock absorbing structure is to be disposed. This arrangement eliminates an additional step of confirming whether the shock absorbing structure is capable of exhibiting a sufficiently high shock absorbing capability when disposed in the space whose size changes depending upon the kinds of the interior component and the body component.

In the present shock absorbing structure constructed as described above, the at least one spacer rib in the form of a thin-walled rib is provided integrally on the shock absorbing member. The spacer rib is comparatively easily deformable upon application of the shock to the shock absorbing member, so that the spacer rib does not give a substantial influence on the shock absorbing capability of the shock absorbing member.

In the present shock absorbing structure, the at least one spacer rib integrally provided on the shock absorbing member having the characteristics described above is disposed in the clearance such that the spacer rib is interposed at least one of (a) between the portion of the interior component and the portion of the body component, which portions are opposed to each other, (b) between the portion of the shock absorbing member at which the spacer rib is provided and a portion of the interior component, which portions are opposed to each other, and (c) between the portion of the shock absorbing member at which the spacer rib is provided and a portion of the body component, which portions are opposed to each other, the spacer rib being opposed to or held in contact with, at the end face of its outer peripheral portion, at least one of the interior component and the body component. According to this arrangement, the clearance between the above-described end face of the spacer rib and at least one of the interior component and the body component is eliminated or minimized between the portion of the interior component and the portion of the body component, which portions are opposed to each other, and/or between the portion of the shock absorbing member at which the spacer rib is provided and the portion of at least one of the interior component and the body component, which portions are opposed to each other.

Like the conventional shock absorbing structure whose configuration corresponds to that of the installation space in which the structure is to be disposed, the present shock absorbing structure is free from, in a state in which it is disposed in the installation space, the abnormal noise which is generated by contact of the structure with the interior component or the body component due to displacement of the structure which arises from vibration caused during running of the vehicle. Further, the interior component is prevented from being easily recessed or dented when it is pressed, for thereby avoiding deterioration of the high-grade image of the interior component.

Accordingly, it is possible to easily and properly design the shock absorbing structure which is capable of exhibiting a sufficiently high degree of shock absorbing capability irrespective of the shape of the installation space in which the structure is to be disposed while assuring advantages obtained where the shock absorbing structure is designed so as to have the shape corresponding to that of the space. Therefore, the present shock absorbing structure can be produced with significantly improved efficiency.

According to one preferred form of the shock absorbing structure of the present invention, the at least one spacer rib consists of a plurality of spacer ribs which are provided on the shock absorbing member such that the plurality of spacer ribs are spaced apart from each other with a prescribed spacing distance, the shock absorbing structure further including at least one connecting rib which extends between and connects at least two of the plurality of spacer ribs that are opposed to each other, so as to prevent the at least two of the plurality of spacer ribs connected by the at least one connecting member, from being easily inclined.

In the shock absorbing structure constructed as described above, the at least one connecting rib which connects the at least two of the plurality of spacer ribs provided on the shock absorbing member effectively prevents the at least two spacer ribs from being easily inclined. Described in detail, when the interior component is pressed in a direction from one of opposite sides thereof which is nearer to the occupants' compartment toward the body component, for instance, the present arrangement effectively avoids the problem that the interior component is undesirably recessed or dented due to easy twisting, bending, or inclining of the spacer ribs interposed between the interior component and the shock absorbing member. Therefore, the interior component does not suffer from deterioration of its high-grade or luxurious image due to the dents or recesses.

According to another preferred form of the present shock absorbing structure, the shock absorbing member includes at least one main body each made of resin and having a tubular wall portion which extends in the installation space substantially in a shock-receiving direction in which the shock is to be primarily applied to the shock absorbing member and which is deformed upon application of the shock so as to absorb the shock.

Upon application of the shock to the shock absorbing structure constructed according to this arrangement, the impact load acts as a compressive load on the tubular wall portion of each main body of the shock absorbing member in the direction of height of the tubular wall portion, thereby inducing deformation or buckling of the tubular wall portion in the height direction. In this instance, the buckled portions of the tubular wall portion are prevented from being folded or superposed on each other in the height direction, unlike in a shock absorbing structure in which a plurality of plate ribs made of a synthetic resin material are arranged in a lattice. Since the buckled portions of the tubular wall portion are not superposed on each other, the shock is efficiently absorbed by each main body even if the tubular wall portion has a reduced height and an effective impact displacement or stroke is accordingly reduced.

In the shock absorbing structure constructed as described above, the shock applied thereto can be reliably absorbed by an amount not smaller than a predetermined lower limit by each of the at least one main body having a size that permits the main body to be disposed in the installation space whose size changes depending upon the combination of the kinds of the interior component and the body component, with a clearance being formed between the main body and the interior component and/or between the main body and the body component. The shock absorbing structure constructed according to this arrangement is capable of stably exhibiting a sufficiently high degree of shock absorbing capability. It is noted that the term "shock-absorbing direction" which is defined as the direction in which the impact or shock is primarily applied to the shock absorbing structure, may be interpreted to mean a direction in which the shock is actually applied to the structure, and also mean any direction which is close or almost parallel to the direction of the actual application of the shock.

According to still another preferred form of the shock absorbing structure of the present invention, the at least one main body consists of a plurality of main bodies which are spaced apart from each other such that the tubular wall portions of the main bodies are opposed to each other in a direction in which the main bodies are spaced apart from each other, the shock absorbing member further including at least one connecting body each connecting adjacent ones of the main bodies and including at least one first connecting member and at least one second connecting member which are formed of a synthetic resin material having flexibility, each of the at least one first connecting member having a shape configured to be deformable more easily in a first direction that is parallel to the shock-receiving direction than in a second direction that is perpendicular to the shock-receiving direction while each of the at least one second connecting member has a shape configured to be deformable more easily in the second direction than in the first direction.

In the shock absorbing structure constructed as described above, the at least one first connecting member and the at least one second connecting member of the shock absorbing member are deformed or deflected for permitting the plurality of main bodies to be easily and accurately located in respective positions within the installation space that enable the main bodies to effectively absorb the applied shock even where the shock absorbing member is to be accommodated into various installation spaces having mutually different configurations and sizes. Further, it is possible to accurately adjust a permissible amount of deflection of the connecting body including the first connecting member and the second connecting member in the first direction parallel to the shock-receiving direction and that in the second direction perpendicular to the shock-receiving direction, by changing the shapes of the first and second connecting members. In this arrangement, therefore, the connecting body can be easily and accurately given a suitable degree of rigidity while maintaining a suitable degree of flexibility, as compared with an arrangement in which the permissible amount of deflection of the connecting body is adjusted by simply changing the kinds of synthetic resin material of the first and second connecting members.

Accordingly, the present shock absorbing structure constructed as described above can be made compact in construction permitting the structure to be accommodated or disposed in the space whose configuration and size changes depending upon the kinds of the interior component and the body component of the vehicle, with the clearance being formed between the shock absorbing member and the interior component and/or between the shock absorbing member and the body component, while exhibiting a sufficiently high degree of shock absorbing capability. Therefore, it is possible to improve the production efficiency and reduce the cost of manufacture of the shock absorbing structure.

### BRIEF DESCRIPTION OF THE DRAWINGS

The above and other objects, features, advantages and technical and industrial significance of the present invention will be better understood by reading the following detailed description of presently preferred embodiments of the invention, when considered in connection with the accompanying drawings, in which:
Fig. 1 is a front elevational view showing a shock absorbing structure constructed according to one embodiment of this invention;
Fig. 2 is a plan view showing the shock absorbing structure of Fig. 1;
Fig. 3 is a fragmentary enlarged view of the shock absorbing structure taken along line 3-3 of Fig. 1;
Fig. 4 is a cross sectional view showing the shock absorbing structure of Fig. 1 as disposed in an installation space defined by and between a headlining and a roof panel of a motor vehicle;
Fig. 5 is a graph indicating a load-displacement amount relationship of the present shock absorbing structure upon application of Fig. 1;
Fig. 6 is a graph indicating a load-displacement amount relationship of a conventional shock absorbing structure; and
Fig. 7 is a cross sectional view corresponding to Fig. 4 and showing a shock absorbing structure constructed according to another embodiment of the invention.

### DETAILED DESCRIPTION OF THE PREFERRED EMBODIMENTS

To further clarify the present invention, there will be described in detail a shock absorbing structures for a vehicle constructed according to the preferred embodiments of this invention, by reference to the accompanying drawings.

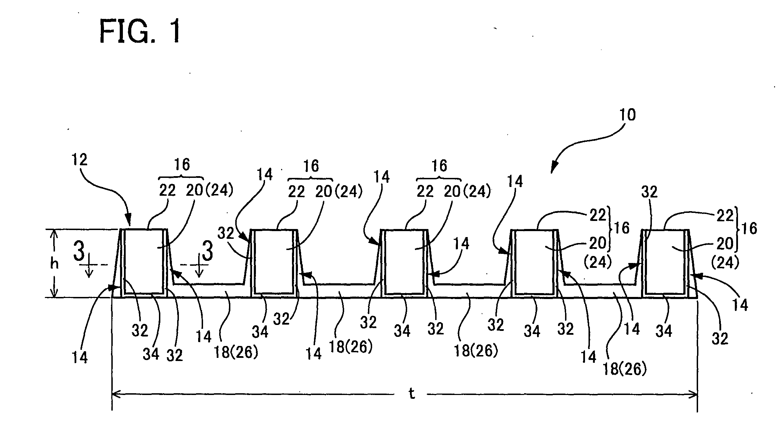

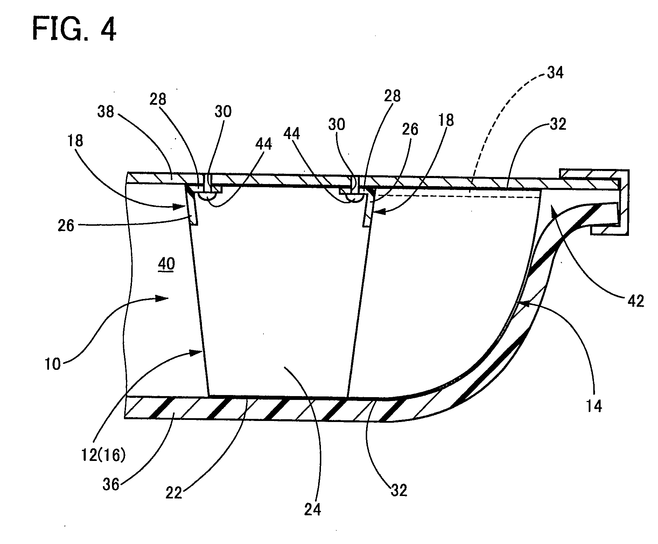

Referring first to Figs. 1 through 3, there is shown a shock absorbing structure 10 for a motor vehicle, constructed according to one embodiment of the present invention. The shock absorbing structure 10 is disposed in an installation space between an interior component of the vehicle in the form of a headlining 36 (Fig. 4) and a body component of the vehicle in the form of a roof panel 38 (Fig. 4) which is disposed on one of opposite sides of the interior component that is remote from an occupants' compartment of the vehicle. As is apparent from these figures, the shock absorbing structure 10 is partially constituted by a generally elongate shock absorbing member indicated at 12.

More specifically described, the shock absorbing member 12 of the present shock absorbing structure 10 includes a plurality of main bodies 16 made of resin (five main bodies in this embodiment) and a plurality of connecting bodies 18 (eight connecting bodies in this embodiment) which connect the plurality of main bodies 16. Each of the main bodies 16 includes a tubular wall portion 20 having a substantially polygonal shape in transverse cross section and a ceiling portion 22 having a substantially rectangular shape.

The tubular wall portion 20 of each main body 16 of the shock absorbing member 12 consists of four lateral walls 24 each of which is a thin-walled, trapezoidal plate having upper and lower sides which are parallel to each other. The upper side of each lateral wall 24 is shorter than the lower side thereof by a predetermined amount. Each lateral wall 24 extends in a direction slightly inclined with respect to the axis of the tubular wall portion 20 such that the distance between the lateral wall 24 and the axis as viewed in a direction perpendicular to the axis gradually decreases in a direction away from the lower side of the lateral wall 24 toward the upper side thereof. This direction in which each lateral wall 24 extends will be hereinafter referred to as "lateral-wall extending direction" in the following description. The ceiling portion 22 is a thin-walled plate having a thickness substantially equal to that of the trapezoidal plate of each lateral wall 24 of the tubular wall portion 20. The generally rectangular ceiling portion 22 is connected at its four sides integrally to the upper sides of the respective lateral walls 24.

In other words, each main body 16 includes the tubular wall portion 20 which consists of the four lateral walls 24 extending, in a state in which the shock absorbing structure 10 is disposed in an installation space 40 (Fig. 4) defined by and between the headlining 36 and the roof panel 38 that are opposed to each other, in a direction in which the impact or shock is primarily applied to the shock absorbing structure 10 (i.e., in a direction in which the headlining 36 and the roof panel 38 are opposed to each other), and the ceiling portion 22 which is formed integrally with the tubular wall portion 20 so as to close the upper one of axially opposite open ends of the tubular wall portion 20. The main body 16 has a rectangular shape in cross section taken in a plane perpendicular to the axis. The cross section has an area which gradually decreases in the direction away from the lower side of the lateral wall 24 toward the upper side thereof. In the present embodiment, the five main bodies 16 are arranged in a single straight line in the longitudinal direction of the shock absorbing member 12 such that the main bodies 16 are spaced apart from each other with a constant spacing distance and such that the lateral walls 24 of adjacent ones of the main bodies 16 are opposed to each other in the longitudinal direction.

Each main body 16 of the shock absorbing member 12 is made of an olefin resin material, such as polypropylene, polyethylene, polybutene, and other synthetic resin having suitable degrees of deformability and flexibility. In the present embodiment, each main body 16 is formed of the material having the suitable degree of deformability, and the cross sectional area of the main body 16 reduces in the direction away from the axially proximal end of the main body 16 toward the axially distal end thereof as described above, so that each main body 16 is easily deformed or buckled in the height or axial direction thereof upon application of a shock to the shock absorbing member 12 (the shock absorbing structure 10) while the buckled portions of each lateral wall 24 are prevented from being superposed on each other in the height direction. Accordingly, even if the height of the lateral wall 24 of the main body 16 is relatively small and an effective distance over which the lateral wall 24 is deformed in the height direction (an effective impact displacement or stroke) is reduced, the shock applied to the structure 10 can be effectively absorbed by an amount not smaller than a predetermined lower limit. Therefore, the shock absorbing member 12 is capable of exhibiting a sufficiently high degree of shock absorbing capability

Each of the connecting bodies 18 which connects adjacent ones of the main bodies 16 is made of a material similar to that of the main body 16, i.e., the above-described olefin resin material such as polypropylene, polyethylene, polybutene and other synthetic resin, having suitable degrees of deformability and flexibility that permit the connecting body 18 to be easily deformed or deflected.

Between the adjacent two main bodies 16, two connecting bodies 18 are provided to connect the adjacent two main bodies 16. Each of the connecting bodies 18 is fixed at its longitudinally opposite ends to the lower end portions of the respective mutually opposed lateral walls 24 of the adjacent two main bodies 16. Described more specifically, the two connecting bodies 18 extend in parallel with each other, from respective widthwise opposite ends of the lower end portions of the lateral wall 24 of one of the adjacent two main bodies 16 toward respective widthwise opposite ends of the lower end portions of the lateral wall 24 of the other of the adjacent two main bodies 16.

According to the arrangement described above, the adjacent ones of the plurality of main bodies 16 which are arranged in the single straight line in the longitudinal direction of the shock absorbing member 12 are connected integrally to each other by the two connecting bodies 18, for thereby providing an integral structure of the shock absorbing member 12 in which the plurality of main bodies 16 are connected by the plurality of connecting bodies 18.

Each connecting body 18 has a first connecting member in the form of a horizontal wall portion 28 and a second connecting member in the form of a vertical wall portion 26. The vertical wall portion 26 is a thin-walled plate and extends in the above-described lateral-wall extending direction, while the horizontal wall portion 28 is a thin-walled plate and extends from the lower end of the vertical wall portion 26 in the width direction of the main body 16, namely, in a direction perpendicular to the lateral-wall extending direction.

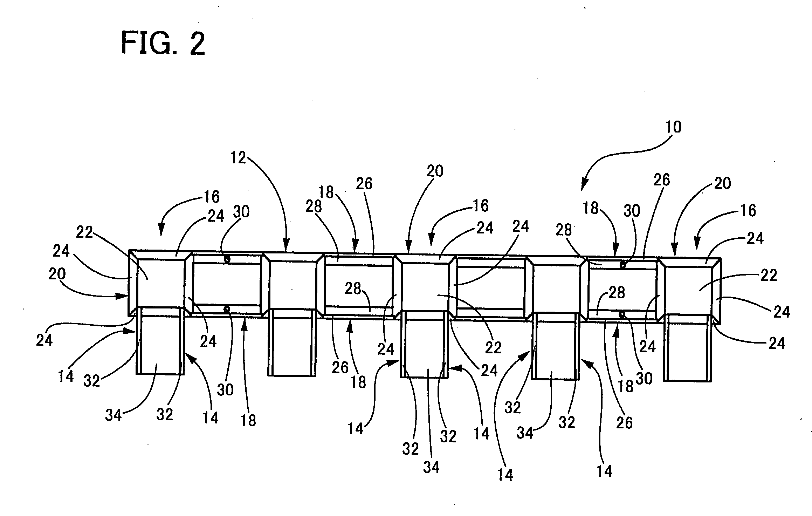

In other words, each connecting body 18 has an L shape in its cross section taken in a plane perpendicular to the longitudinal direction of the shock absorbing member 12, i.e., in a plane parallel to the lateral-wall direction, and is provided as a single piece consisting of the plate-like vertical wall portion 26 and the plate-like horizontal wall portion 28 that are integrally connected to each other, as shown in Fig. 4. The vertical wall portion 26 has a prescribed thickness as measured in the width direction of the main body 16 that corresponds to a direction perpendicular to the lateral-wall extending direction, and a prescribed width as measured in the height direction of the main body 16 that corresponds to the lateral-wall extending direction. The horizontal wall portion 28 has a prescribed thickness as measured in the height direction of the main body 16 that corresponds to the lateral-wall extending direction, and a prescribed width as measured in the width direction of the main body 16 that corresponds to the direction perpendicular to the lateral-wall extending direction. The reference numeral 30 in Fig. 2 indicates a hole in which a screw is inserted for fixing the shock absorbing member 12 to the roof panel 38.

In the connecting body 18 constructed as described above, the vertical wall portion 26 is easily or readily deformed or deflected in the direction perpendicular to the lateral-wall extending direction while it is less likely to be deformed or deflected in the lateral-wall extending direction. The horizontal wall portion 28 is easily or readily deformed or deflected in the lateral-wall extending direction while it is less likely to be deformed or deflected in the direction perpendicular to the lateral-wall extending direction. In the shock absorbing member 12 having the thus constructed connecting bodies 18, it is possible to easily and accurately adjust the flexibility and rigidity of the connecting bodies 18, namely, a permissible amount of deformation of the connecting bodies 18 in the lateral-wall extending direction and that in the direction perpendicular to the lateral-wall extending direction, by suitably changing the thickness and the width of the vertical wall portion 26 and those of the horizontal wall portion 28.

The present shock absorbing member 12 wherein the plurality of main bodies 16 are connected to each other by the plurality of connecting bodies 18 constructed as described above is given a certain degree of flexibility that permits the shock absorbing member 12 to be easily deformed and a certain degree of rigidity that prevents, in a state in which the member 12 is disposed in the installation space 40, easy displacement of the member 12 upon application of the shock thereto, from the nominal position within the installation space 40 between the headlining 36 and the roof panel 38

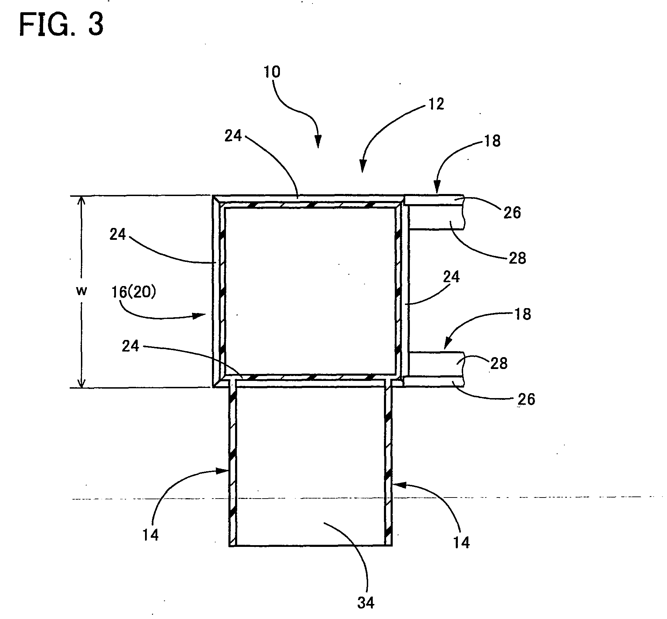

In the present embodiment, the height "h" (Fig. 1) of the shock absorbing member 12 corresponding to the height of each of the main bodies 16 connected by the connecting bodies 18 is made slightly smaller than the height of the installation space 40 defined by and between the headlining 36 and the roof panel 38 in which the shock absorbing structure 10 is to be disposed, while the width "w" (Fig. 3) of the shock absorbing member 12 corresponding to the width of each main body 16 is made smaller by a prescribed amount than the width of the installation space 40. Further, the length "t" (Fig. 1) of the shock absorbing member 12 corresponding to a total length of five main bodies 16 and a total length of four connecting bodies 18 which are arranged in the longitudinal direction of the member 12 is made smaller by a prescribed amount than the length of the installation space 40.

According to the arrangement described above, the shock absorbing member 12 is made compact in its entirety and has a size which is smaller than that of the installation space 40 defined by and between the headlining 36 and the roof panel 38, so that the shock absorbing member 12 is disposed in the space 40 with a suitable clearance or gap 42 formed between the member 12 and the headlining 36 and between the member 12 and the roof panel 38, as shown in Fig. 4.

The present shock absorbing structure 10 having the shock absorbing member 12 constructed as described above is characterized by further comprising spacer ribs 14 which have not been used for prior arts and will be described in greater detail.

In the present embodiment, the shock absorbing member 12 includes a plurality of spacer ribs 14 as shown in Figs. 1 and 2. Each spacer rib 14 is a thin-walled plate and extends from the outer surface of one of two lateral walls 24 of each main body 16 on which the connecting bodies 18 are not formed, in a direction perpendicular to the height direction of each main body 16. In the present shock absorbing member 12, two spacer ribs 14 extend from the outer surface of the above-indicated one of the two lateral walls 24 of each main body 16, as shown in Fig. 1. Those two spacer ribs 14 are opposed to each other with a spacing distance therebetween corresponding to the width of the ceiling portion 22 of the main body 16.

Each spacer rib 14 is made of the same synthetic resin material as that used for forming each main body 16 and each connecting body 18. Since the spacer rib 14 is made of the material described above and constituted by the thin-walled plate, the spacer rib 14 is easily or readily subjected to compressive deformation, namely, the spacer rib 14 is likely to be deformed or buckled upon application of the shock, in a state in which the shock absorbing member 12 is disposed in the space 40 between the headlining 36 and the roof panel 38. The spacer rib 14 preferably has a thickness of about 1 mm for permitting the spacer rib 14 to be subjected to the compressive deformation with high reliability while assuring good formability.

In the present embodiment, as shown in Fig. 4, each spacer rib 14 has a configuration which substantially corresponds to a vertical cross sectional shape, taken in a plane of Fig. 4, of the clearance 42 formed between the main bodies 16 and the headlining 36 and between the main bodies 16 and the roof panel 38 when the shock absorbing member 12 is disposed in the installation space 40 between the headlining 36 and the roof panel 38. According to this arrangement, the spacer rib 14 is located in the clearance 42 formed when the shock absorbing member 12 is disposed in the space 40, such that the spacer rib 14 is interposed between a portion of the headlining 36 and a portion of the roof panel 38 which portions are opposed to each other, with an end face 32 of the outer peripheral portion of the spacer rib 14 being held in contact or opposed to the headlining 36 and the roof panel 38.

In the shock absorbing member 12 constructed according to the present embodiment, a connecting rib 34 is provided between the two spacer ribs which are formed integrally on each main body 16 and which are opposed to each other, such that the connecting rib 34 connects the two spacer ribs, as shown in Figs. 2 and 3. The connecting rib 34 is a thin-walled rectangular plate having a width substantially equal to that of the ceiling portion 22 of the main body 16 and formed of the same synthetic resin material as that used for forming the spacer rib 14.

The connecting rib 34 extends from a lower end portion of one of the two spacer ribs 14 of each main body 16 that are opposed to each other, toward a lower end portion of the other spacer rib 14, so as to connect the two spacer ribs 14 at the respective lower end portions thereof, which lower end portions are located remote from the ceiling portion 22 of the main body 16.

In other words, the integral body of the two spacer ribs 14, 14 and the connecting rib 34 which connects the two spacer ribs 14, 14 has a generally U-shape as shown in Fig. 1 and is provided integrally on the predetermined one of the lateral walls 24 of each main body 16. According to this arrangement, when the headlining 36 is pressed in a direction from the occupants' compartment toward the roof panel 38 in a state in which the shock absorbing member 12 is disposed in the space 40 between the headlining 36 and the roof panel 38, the spacer ribs 14 of each main body 16 are advantageously prevented from easily twisted, bent, or inclined upon application of the pressing force thereto, owing to the connecting rib 34 which connects the two spacer ribs 14 to each other.

The present shock absorbing structure 10 including the shock absorbing member 12 and the plurality of spacer ribs 14 constructed as described above is disposed in the installation space 40 defined by and between the headlining 36 and the roof panel 38, as shown in Fig. 4.

Described more specifically, the shock absorbing structure 10 is disposed in the installation space 40 defined by and between the headlining 36 and the roof panel 38, such that the plurality of main bodies 16 of the shock absorbing member 12 are located between the inner surface of the headlining 36 and the inner surface of the roof panel 38, which inner surfaces are opposed to each other, and the plurality of spacer ribs 14 formed integrally on the plurality of main bodies 16 are located in the clearance 42 formed between the shock absorbing member 12 and the headlining 36 and between the shock absorbing member 12 and the roof panel 38.

In the state in which the shock absorbing structure 10 is disposed in the space 40 defined by and between the headlining 36 and the roof panel 38 as described above, the lateral walls 24 of the tubular wall portion 20 of each main body 16 extend in a direction from the roof panel 38 toward the headlining 36 while the ceiling portion 22 of each main body 16 is held in contact with or opposed to the inner surface of the headlining 36 which is opposed to the inner surface of the roof panel 38. Further, each of the plurality of spacer ribs 14 is disposed in the clearance 42 formed between the shock absorbing member 12 and the headlining 36 and between the shock absorbing member 12 and the roof panel 38, such that each spacer rib 14 is interposed between the portion of the headlining 36 and the portion of the roof panel 38, which portions are opposed to each other, with the end face 32 of the outer peripheral portion of each spacer rib 14 being held in contact with or opposed to the headlining 36 and the roof panel 38. Thus, the entirety of the shock absorbing structure 10 is disposed in the installation space 40 defined by and between the headlining 36 and the roof panel 38.

In the state in which the shock absorbing structure 10 is disposed in the installation space 40 as described above, each connecting body 18 is fastened to the roof panel 38 by a screw 44 inserted into the hole 30 which is formed through the horizontal wall portion 28 of the connecting body 18, so that the shock absorbing structure 10 is fixedly positioned within the space 40 between the headlining 36 and the roof panel, such that the lateral-wall extending direction of the shock absorbing member 12 is substantially parallel to the shock-receiving direction in which the shock is applied to the structure 10.

The present shock absorbing structure 10 includes the shock absorbing member 12 which absorbs, with high reliability, the shock applied to the structure 10 in the state in which the structure 10 is disposed in the installation space 40, and the plurality of spacer ribs 14 each having a configuration corresponding to a part of the clearance 42 formed when the shock absorbing member 12 is disposed in the space 40. The entirety of the shock absorbing structure 10 is disposed in the installation space 40 such that the shock absorbing member 12 is located in the space 40 with the clearance 42 being formed between the member 12 and the headlining 36 and between the member 12 and the roof panel 38, and such that each spacer rib 14 is located in the clearance 42 such that the spacer rib 14 is interposed between the portion of the headlining 36 and the portion of the roof panel 38, which portions are opposed to each other.

The thus constructed shock absorbing structure 10 eliminates in its designing process a step of confirming whether the structure 10 exhibits a sufficiently high degree of shock absorbing capability when the structure 10 is disposed in the installation space 40. In addition, the present shock absorbing structure 10 is effective to prevent an abnormal noise from being generated due to contact thereof with the headlining 36 or the roof panel 38 by displacement of the shock absorbing member 12 which arises from vibration caused during running of the vehicle. Further, the headlining 36 is protected from being easily concaved or dented when it is pressed, so that the headlining 36 is prevented from having a poor or low-grade image contrary to a desirable luxurious or high-grade image.

The shock absorbing structure 10 according to the present embodiment is easily and properly designed such that it exhibits a sufficiently high degree of shock absorbing capability even in a case where the structure 10 is disposed in spaces having sizes and configurations different from those of the space 40 between the headlining 36 and the roof panel 38, while assuring advantages obtained when the structure 10 is designed so as to correspond to each of the spaces having respective different configurations. Thus, the present shock absorbing structure 10 can be manufactured with improved efficiency

In the shock absorbing structure 10 constructed according to the present embodiment, the flexibility and rigidity of the plurality of connecting bodies 18 each connecting adjacent ones of the main bodies 16 of the shock absorbing member 12 are easily and accurately adjusted as explained above. Therefore, the present shock absorbing structure 10 is given a certain degree of flexibility that permits the shock absorbing member 12 to be readily or easily deformed and a certain degree of rigidity that prevents, in a state in which the member 12 is disposed in the installation space 40 between the headlining 36 and the roof panel 38, easy displacement of the member 12 from the nominal position within the space 40 upon application of the shock thereto. Accordingly, the shock absorbing structure 10 has a configuration which is made compact and which permits the structure 10 to be accommodated or disposed in the spaces having respective different sizes and configurations, with the clearance 42 being formed when the structure 10 is disposed in each space, while assuring a sufficiently high degree of shock absorbing capability. This arrangement is effective to further improve the production efficiency of the shock absorbing structure 10.

In the present shock absorbing structure 10 wherein each of the spacer ribs 14 provided integrally on the shock absorbing member 12 is readily subjected to the compressive deformation, namely, each spacer rib 14 is likely to be bucked or deformed upon application of the shock to the structure 10 in the state in which the structure 10 is disposed in the space 40, the applied shock can be sufficiently absorbed by the shock absorbing member 12 with high reliability without being interfered by the presence of the spacer rib 14.

In the present shock absorbing structure 10 wherein the two spacer ribs 14 provided on each main body 16 of the shock absorbing member 12 such that the two spacer ribs 14 are opposed to each other are connected by the connecting rib 34, the spacer ribs 14 are prevented from being easily inclined by pressing force generated when the headlining 36 is pressed in a direction from the occupants' compartment toward the roof panel 38, for instance, in the state in which the shock absorbing member 12 is disposed in the space 40. Since the inclination of the spacer ribs 14 is prevented owing to the connecting rib 34, the headlining 36 is protected from being easily dented or recessed, eliminating the problem of deterioration of the high-grade or luxurious image of the headlining 36.

There will be described in detail experiments conducted by the inventors to confirm that the shock absorbing structure constructed according to the present invention exhibits advantageous characteristics described above.

Initially, a shock absorbing structure shown in Figs. 1-3 was prepared. In the shock absorbing structure, each main body has a thickness of 1.2 mm, a height of 25 mm, and maximum length and width dimensions of 25 mm. Each spacer rib has a thickness of 1 mm and each connecting rib has a thickness of 2 mm. The shock absorbing structure was produced as an integral member by injection molding of polypropylene.

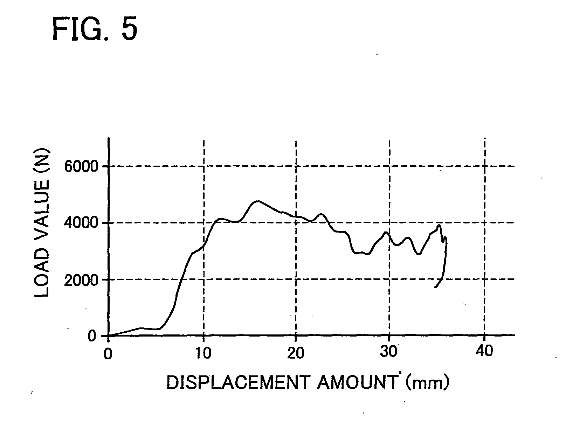

The thus prepared shock absorbing structure was subjected to a collision test in a known manner, and was examined of a relationship between load and an amount of displacement of the structure upon application of the load thereto. The result is shown in the graph of Fig. 5. Based on the data representing the load-displacement relationship, the Head Injury Criteria: HIC (d) was obtained according to a known method. The HIC was 546.

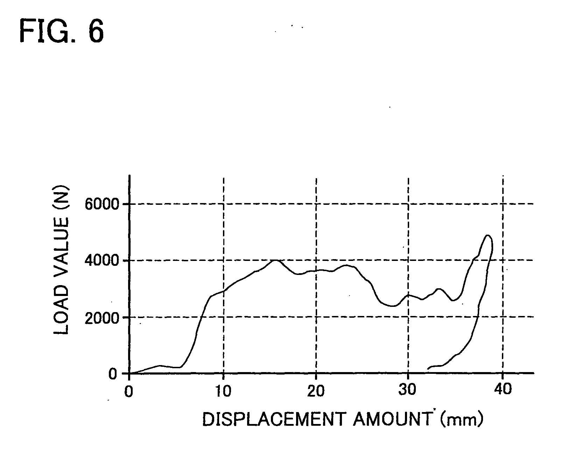

For comparison, there was prepared a shock absorbing structure similar to that shown in Figs 1-3 except that the comparative structure is constituted only by the shock absorbing member without including any spacer ribs and connecting ribs. In the same manner as described above, the comparative shock absorbing structure was subjected to the collision test to obtain a relationship between load and displacement amount of the structure. The result is indicated in the graph of Fig. 6. Based on the data representing the load-displacement relationship, the Head Injury Criteria: HIC (d) was obtained according to a known method. The HIC was 602. The dimensions of each part of the main body of the comparative shock absorbing structure are the same as those of the present shock absorbing structure.

As is apparent from the results indicated in the graphs of Figs. 5 and 6, the configuration of the load-displacement curve of the present structure is substantially identical with that of the comparative structure. Further, the values indicative of the HIC (d) in the present structure and the comparative structure are considerably lower than a reference value of 1000 specified in FMVSS201. It is accordingly recognized that the present shock absorbing structure is capable of exhibiting excellent shock absorbing capability substantially equal to that in the comparative shock absorbing structure, in spite of the presence of the spacer ribs and connecting ribs provided on the shock absorbing member.

While the presently preferred embodiment of the invention has been described in detail, for illustrative purpose only, it is to be understood that the present invention is not limited to the details of the illustrated embodiment, but may be otherwise embodied.

In the shock absorbing member 12 of the illustrated embodiment, each of the plurality of main bodies 16 has the tubular wall portion 20 consisting of the four lateral walls 24 which extend in the shock-receiving direction and which are deformed upon application of the shock for thereby absorbing the shock, and the adjacent ones of the plurality of main bodies 16 are connected by the two connecting bodies 18. The shock absorbing member 12 may include single main body 16. Where the plurality of main bodies 16 are connected by the connecting bodies 18, the structure of each connecting body 18 is not limited to that of the illustrated embodiment.

The structure of the shock absorbing member 12 is not particularly limited, as long as the member 12 is disposed in an installation space whose size is determined by a combination of the kinds of the interior component and the body component of the vehicle, with the clearance being formed between the member 12 and the interior component and/or between the member 12 and the body component, and as long as the member 12 is deformed by the shock applied thereto so as to absorb the applied shock by an amount not smaller than the predetermined lower limit. For instance, in place of the main body 16 made of resin, there may be employed a known rib structure made of resin or other known shock absorbing members made of materials other than the synthetic resin material.

Where the shock absorbing member 12 includes the main bodies 16 having the tubular wall portion 20 described above, the configuration of each main body 16 is not limited to that of the illustrated embodiment. For instance, the tubular wall portion 20 may be constituted by a polygonal tubular wall consisting of three, five or more plate-like lateral walls 24. Alternatively, the tubular wall portion 20 may consist of a cylindrical or straight lateral wall or a tapered cylindrical lateral wall.

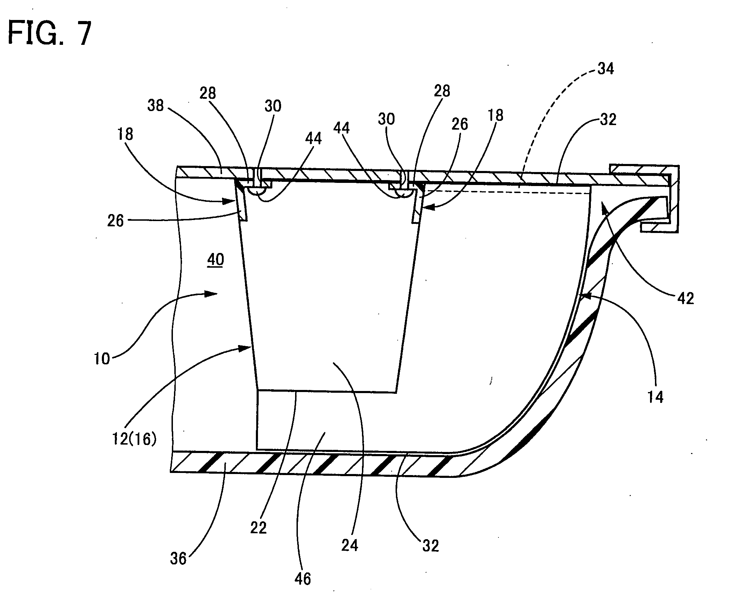

The configuration and size of the spacer rib 14 may be suitably determined depending upon those of the clearance 42 formed, in the installation space 40, between the shock absorbing member 12 and the interior component of the vehicle in the form of the headlining 36 and between the member 12 and the body component of the vehicle in the form of the roof panel 38. Where the clearance 42 is formed not only between the headlining 36 and the lateral walls 24 of the main bodies 16 of the shock absorbing member 12 and between the lateral walls 24 and the roof panel 38, but also between the ceiling portions 22 of the main bodies 16 and the headlining 36 or between the ceiling portions 22 and the roof panel 38, each spacer rib 14 may be provided an extension 46 which is formed integrally with and extends from an upper end thereof over the ceiling portion 22 of each main body 16 of the shock absorbing member 12, as shown in Fig. 7. The extension 46 may have a configuration corresponding to the cross sectional shape of the clearance formed between the ceiling portion 22 and the headlining 36 or between the ceiling portion 22 and the roof panel 38.

While the two spacer ribs 14 are formed on one of the lateral walls 24 of each main body 16 of the shock absorbing member 12 in the illustrated embodiment, the number of the spacer rib is not particularly limited. For instance, a single spacer rib 14 or more than three spacer ribs 14 may be formed on the lateral wall 24. Alternatively, the lateral walls 24 of the respective main bodies 16 may have mutually different numbers of the spacer ribs 14.

In the illustrated embodiment, the connecting rib 34 connects the two spacer ribs 14 which are provided on each main body 16 so as to be opposed to each other. The manner in which the connecting rib 34 connects the spacer ribs 14 is not particularly limited. For instance, the connecting rib 34 may connect the spacer ribs 14 respectively provided on the adjacent ones of the main body 16 or all spacer ribs 14 provided on the plurality of main bodies 16. The configuration of the connecting rib 34 and the position at which the connecting rib 34 is formed are not particularly limited.

The materials respectively used for forming the spacer rib 14 and the connecting rib 34 are not particularly limited.

In the illustrated embodiment, each connecting body 18 is constituted by the plate-like first and second connecting members in the form of the horizontal wall portion 28 and the vertical wall portion 26, respectively, which are formed integrally with each other such that the connecting body 18 has the L-shaped cross sectional shape. The vertical and horizontal wall portions 26, 28 may be separately prepared different members, so that the connecting body 18 may be constituted by mutually independent members.

In either of the case where the vertical and horizontal wall portions 26, 28 are formed integrally with each other and the case where the vertical and horizontal wall portions 26, 28 are provided by the mutually independent members, the number and position of each of the vertical and horizontal portions 26, 28 are not particularly limited, but may be suitably determined depending upon, for instance, the degree of rigidity required by the shock absorbing structure 10.

In the illustrated embodiment, the first and second connecting members of each connecting body 18 are respectively provided by the plate-like horizontal and vertical wall portions 28, 26. The first connecting member may have any other shape as long as it is configured to be deflectable more easily in the lateral-wall extending direction in which the lateral walls of each main body extend, than in the direction perpendicular to the lateral-wall extending direction, while the second connecting member may have any other shape as long as it is configured to be deflectable more easily in the direction perpendicular to the lateral-wall extending direction than in the lateral-wall extending direction.

While the illustrated embodiment of the invention is the shock absorbing structure which is advantageously disposed in the installation space 40 defined by and between the headlining 36 and the roof panel 38 of the motor vehicle, it is to be understood that the principle of the present invention is applicable to a shock absorbing structure to be disposed in a space between the interior component of the vehicle other than the headlining and the body component located on one of opposite sides of the interior component which is remote from the vehicle occupants' compartment, and a shock absorbing structure to be incorporated in any vehicles other than the motor vehicle.

It is to be understood that the present invention may be embodied with various other changes, modifications and improvements, such as those described in the SUMMARY OF THE INVENTION, which may occur to those skilled in the art, without departing from the spirit and scope of the invention defined in the following claims.

A shock absorbing structure (10) for a vehicle disposed in a space (40) which is defined by and between an interior component (36) of the vehicle and a body component (38) of the vehicle, characterized by including: a shock absorbing member (12) disposed in the space which has a size that is determined by a combination of kinds of the interior component and the body component, the shock absorbing member being disposed in the space such that a clearance (42) is formed between the shock absorbing member and the interior component and/or between the shock absorbing member and the body component, the shock-absorbing member being deformed upon application of a shock thereto so as to absorb the shock by an amount not smaller than a prescribed lower limit; and at least one spacer rib (14) each consisting of a thin-walled rib provided integrally on the shock absorbing member, the at least one spacer rib being disposed in the clearance such that the spacer rib is interposed at least one of (a) between a portion of the interior component and a portion of the body component, which portions are opposed to each other, (b) between a portion of the shock absorbing member at which the thin-walled rib is provided and a portion of the interior component, which portions are opposed to each other, and (c) between the portion of the shock absorbing member at which the thin-walled rib is provided and a portion of the body component, which portions are opposed to each other, the thin-walled rib being opposed to or held in contact with, at an end face of an outer peripheral portion thereof, at least one of the interior component and the body component.

## Claims

1. A shock absorbing structure (10) for a vehicle disposed in an installation space (40) which is defined by and between an interior component (36) of the vehicle and a body component (38) of the vehicle, **characterized by** including:
a shock absorbing member (12) disposed in said installation space which has a size that is determined by a combination of kinds of said interior component and said body component, said shock absorbing member being disposed in said installation space such that a clearance (42) is formed between said shock absorbing member and said interior component and/or between said shock absorbing member and said body component, said shock absorbing member being deformed upon application of a shock thereto so as to absorb the shock by an amount not smaller than a prescribed lower limit; and
at least one spacer rib (14) each consisting of a thin-walled rib provided integrally on said shock absorbing member, said at least one spacer rib being disposed in said clearance such that said spacer rib is interposed at least one of (a) between a portion of said interior component and a portion of said body component, which portions are opposed to each other, (b) between a portion of said shock absorbing member at which said thin-walled rib is provided and a portion of said interior component, which portions are opposed to each other, and (c) between said portion of said shock absorbing member at which said thin-walled rib is provided and a portion of said body component, which portions are opposed to each other, said thin-walled rib being opposed to or held in contact with, at an end face of an outer peripheral portion thereof, at least one of said interior component and said body component.

2. A shock absorbing structure according to claim 1, wherein said at least one spacer rib consists of a plurality of spacer ribs which are provided on said shock absorbing member such that said plurality of spacer ribs are spaced apart from each other with a prescribed spacing distance, said shock absorbing structure further including at least one connecting rib (34) which extends between and connects at least two of said plurality of spacer ribs that are opposed to each other, so as to prevent said at least two of said plurality of spacer ribs connected by said at least one connecting member, from being easily inclined.

3. A shock absorbing structure according to claim 1 or 2, wherein said shock absorbing member includes at least one main body (16) each made of resin and having a tubular wall portion (20, 24) which extends in said installation space substantially in a shock-receiving direction in which the shock is to be primarily applied to said shock absorbing member and which is deformed upon application of the shock so as to absorb the shock.

4. A shock absorbing structure according to claim 3, wherein said at least one main body consists of a plurality of main bodies which are spaced apart from each other with a prescribed spacing distance such that said tubular portions of said main bodies are opposed to each other in a direction in which said main bodies are spaced apart from each other, said shock absorbing member further including at least one connecting body (18) each connecting adjacent ones of said main bodies and including at least one first connecting member (28) and at least one second connecting member (26) which are formed of a synthetic resin material having flexibility, each of said at least one first connecting member having a shape configured to be deformable more easily in a first direction that is parallel to said shock-receiving direction than in a second direction that is perpendicular to said shock-receiving direction while each of said at least one second connecting member has a shape configured to be deformable more easily in said second direction than in said first direction.

5. A shock absorbing structure according to any one of claims 1 to 4, wherein said at least one spacer rib is formed of a synthetic resin material that permits said at least one spacer rib to be subjected to compressive deformation upon application of the shock to said shock absorbing member.

6. A shock absorbing structure according to any one of claims 1 to 5, wherein said at least one spacer rib has a thickness of about 1.0 mm.
